# EUROPÄISCHE PATENTANMELDUNG

(11) **EP 1 314 689 A2**
(43) Veröffentlichungstag der Anmeldung: **28.05.2003**
(21) Anmeldenummer: 02022417.6
(22) Anmeldetag: 04.10.2002
(51) Int. Cl.: C01B 3/36

(54) **Verfahren zur Herstellung von Synthesegas**

(30) Priorität: 21.11.2001 DE 10156980
(71) Anmelder: Lurgi AG, 60295 Frankfurt am Main (DE)
(72) Erfinder: Schlichting, Holger, 65719 Hofheim (DE); Liebner, Waldemar, 61440 Oberursel (DE); Morgenroth, Rainer, 61381 Friedrichsdorf (DE); Erdmann, Christoph, 65719 Hofheim (DE); Grünfelder, Gerd Johann, 61352 Bad Homburg (DE); Fellner, Helmut, 61352 Bad Homburg (DE); Hofmockel, Jürgen, 60314 Frankfurt (DE)

(57) **Zusammenfassung**

Die Erfindung betrifft ein Verfahren sowie einen Brenner zur Herstellung von Kohlenmonoxid, bei dem flüssige Kohlenwasserstoffe wie z.B. Öl oder Erdgas bei hohen Temperaturen nichtkatalytisch in Kohlenmonoxid (CO) und Wasserstoff (H₂) zerlegt werden.

Der bisher als Zerstäubungs- und Kühlmedium verwendete Wasserdampf wird durch Kohlendioxid ersetzt, welches stromab des Reaktorsystems aus dem erzeugten Synthesegas abgetrennt und rezirkuliert wird. Um den apparativen Aufwand zur Bereitstellung des Vergasungsmediums zu reduzieren, wird das Kohlendioxid aus der nachfolgenden Gaswäsche abgezogen, in den Brenner zugeführt und unmittelbar vor der Mündungsöffnung für den Brennstoff über eine oder mehrere Düsen entspannt, wobei der Differenzdruck der Entspannung des Kohlendioxid nur 2 % bis 50 % des Reaktordruckes beträgt.

## Beschreibung

Die Erfindung betrifft ein Verfahren sowie einen zugehörigen Brenner zur Herstellung von Synthesegas, bei dem flüssige Kohlenwasserstoffe wie z.B. Öl oder flüssige Nebenprodukte der chemischen Produktion sowie gasförmige Kohlenwasserstoffe wie z.B. Erdgas oder Brenngas bei hohen Temperaturen nichtkatalytisch in Kohlenmonoxid (CO) und Wasserstoff (H₂) zerlegt werden.

Dieses Verfahren ist bekannt unter dem Namen Multi Purpose Gasification (MPG-Verfahren) und besteht aus einem Reaktor, der Abhitzestrecke, der Gasreinigung und der CO₂ und H₂S-Wäsche. Kernstück dieser Technologie ist der Brenner, in dem die Einsatzstoffe gemischt und dem Reaktor zugeführt werden.

In den Schriften AT-B-369345 und EP-B-0127273 ist das Funktionsprinzip des Brenners ausführlich beschrieben. Flüssiger Brennstoff wird mit Hilfe von Hochdruckdampf in einer speziellen Düse zerstäubt. Das über den Zerstäubungsdampf eingebrachte Wasser nimmt an der Reaktion im MPG-Reaktor teil und wird teilweise zu H₂ gewandelt. Bei der nichtkatalytischen Erdgasspaltung wird Wasserdampf benötigt, um Brennerschäden durch Überhitzen zu vermeiden. Durch das im Erdgas vorgegebene Kohlenstoff-Wasserstoff-Verhältnis sind nur geringe CO/H₂ Verhältnisse im Produktgas erreichbar. Die Verwendung von Wasserdampf verschlechtert dieses Verhältnis zusätzlich. Dies ist besonders nachteilig, wenn ein Synthesegas mit hohem Kohlenmonoxidanteil benötigt wird oder wenn das eigentliche Wertgas Kohlenmonoxid selbst ist.

In der EP-B-0380988 wird ein Brenner vorgeschlagen, der geeignet ist, flüssige Brennstoffe in den Reaktor einzuleiten und bei dem die Zerstäubung des Brennstoffes mit Wasserdampf oder alternativ mit Kohlendioxid (CO₂) erfolgt.

Nachteilig an diesem Brenner ist der hohe benötigte Überdruck von 100 % bis 250 % des kritischen Druckverhältnisses, mit dem der Dampf bzw. das CO₂ in den Brenner eingeleitet werden muss. Dies erfordert im Falle des CO₂ als Zerstäubungsmittel einen hohen energetischen und apparativen Aufwand für die Verdichtung des CO₂.

Der Erfindung liegt die Aufgabe zugrunde, ein verbessertes Verfahren zur Herstellung von Synthesegas zu schaffen, bei dem für die Zerstäubung des Brennstoffs nicht ausschließlich Dampf, sondern auch andere geeignete gasförmige Medien wie z.B. Kohlendioxid, Erdgas, Brenngas oder Abgas oder eine Mischung davon verwendet wird und bei dem die Zerstäubung des Brennstoffs in den Reaktionsraum kostengünstig und mit einem apparativ geringen Aufwand erfolgt.

Erfindungsgemäß wird die Aufgabe dadurch gelöst, dass zur Herstellung von Synthesegasen durch partielle Oxidation von flüssigen oder gasförmigen Brennstoffen in Gegenwart von Sauerstoff oder sauerstoffhaltigen Gasen der Brennstoff, das sauerstoffhaltige Gas und das Zerstäubungsmedium getrennt dem Brenner zugeführt werden und das Zerstäubungsmedium unmittelbar vor der Mündungsöffnung für den Brennstoff über eine oder mehrere Düsen entspannt wird, wobei der Differenzdruck der Entspannung des Zerstäubungsmediums nur 2 % bis 50 % des Reaktordruckes beträgt.

Mit diesem geringen benötigten Überdruck für die Entspannung des Zerstäubungsmediums bei der Einleitung in den Brenner verringert sich der Aufwand zur Bereitstellung des Zerstäubungsmediums erheblich. Wird Zerstäubungsdampf benutzt, muss dieser nicht aus einem separaten Netz oder Kessel mit entsprechend hoher Druckstufe bereitgestellt werden, sondern es kann der zwangsläufig im Abhitzekessel des Vergasungsreaktors erzeugte Dampf direkt oder nach leichter Überhitzung als Vergasungsmedium genutzt werden.

Wird Kohlendioxid als Zerstäubungsmedium benutzt, kann auf eine externe Bereitstellung des Kohlendioxid verzichtet werden, wenn das Kohlendioxid aus der nachfolgenden Gaswäsche aus dem Rohsynthesegas abgezogen wird und dann dem Brenner wieder zugeführt wird. Hier ist der im Brenner benötigte geringe Überdruck des Zerstäubungsmediums besonders vorteilhaft. Der benötigte Verdichter, der das in der Gaswäsche abgetrennte Kohlendioxid auf den zur Zerstäubung im Brenner benötigten Druck komprimiert, kann mit weniger Stufen ausgerüstet werden und benötigt weniger Antriebsenergie. Es ist von Vorteil, vor der Einleitung in den Brenner das Kohlendioxid leicht zu überhitzen.

Als Zerstäubungsmedien eignen sich ebenfalls andere gasförmige Medien, die im Prozess selbst oder in der Anlage verfügbar sind wie zum Beispiel:
- Tailgas aus einer Druck-Wechsel-Adsorption (DWA-Anlage) oder Membrananlage zur Wasserstoffgewinnung,
- Tailgas aus einer Cold Box zur Kohlenmonoxidgewinnung,
- Gase, die als Nebenprodukt anderer Prozesse entstehen, die im Allgemeinen in einem Fuelgasnetz gesammelt werden und sonst in der Regel verbrannt werden müssen,
- Erdgas,

Diese Gase können einzeln, als Mischung oder mit Dampf angereichert als Zerstäubungsmedium dem Brenner zugeführt werden.

Um eine wirkungsvolle Zerstäubung zu erreichen, muss die Austrittsgeschwindigkeit des gasförmigen Zerstäubungsmediums aus der Düse im Bereich von 20 m/s bis 300 m/s liegen. Bevorzugt wird mit einer Austrittsgeschwindigkeit des Zerstäubungsmediums aus der Düse im Bereich von 40 m/s bis 200 m/s gearbeitet. Die Höhe der Austrittsgeschwindigkeit hängt unter anderem vom verwendeten Zerstäubungsmedium sowie vom nachfolgend erläuterten Durchmesserverhältnis in der Düse ab.

Die hohe Austrittsgeschwindigkeit wird durch die konstruktive Gestaltung des Brenners erreicht, bei dem der Durchmesser des Düsenaustrittes für den flüssigen Brennstoff zum Durchmesser der Düsenöffnung des Zerstäubungsmediums in einem bestimmten Verhältnis steht. Das Durchmesserverhältnis beträgt 1/1,1 bis 1/5, bevorzugt 1/1,3 bis 1/3. Mit dieser Gestaltung des Düsenraumes wird die notwendige Austrittsgeschwindigkeit zur Vermischung der Medien erreicht. Aufgrund dieser hohen Austrittsgeschwindigkeit kann erfindungsgemäß mit einer geringeren Entspannung gearbeitet werden.

Ausgestaltungsmöglichkeiten des Verfahrens werden mit Hilfe der Zeichnungen beispielhaft erläutert.

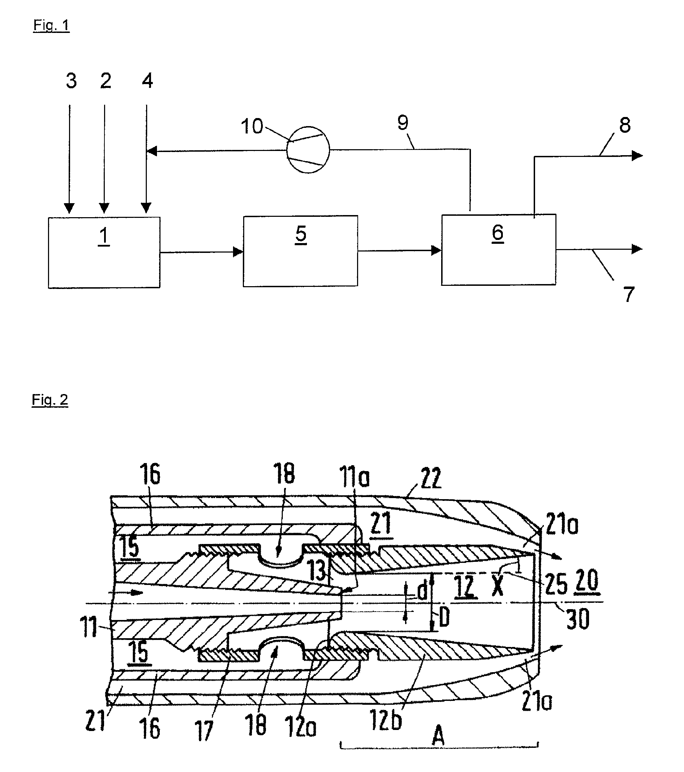

Figur 1 zeigt das verfahrenstechnische Schema der Herstellung von Kohlenmonoxid. In dem Reaktor (1) ist ein nicht dargestellter Brenner angeordnet. In den Reaktor (1) wird über eine Leitung (2) flüssiger Brennstoff oder Gas eingeleitet. Über Leitung (3) wird der zur Verbrennung notwendige Sauerstoff hinzu gegeben. Eine weitere Leitung (4) führt das zur Zerstäubung und Kühlung notwendige Zerstäubungsmedium zu. Dies kann z.B. mittels einem nicht dargestellten Gastank bereitgestellt werden. In dem Reaktor wird der Einsatzstoff bei Temperaturen von 1000 bis 1500 ° C und einem Druck von 1 bis 100 bar vergast. Bei der Vergasung entstehen die Gase CO, H₂, CO₂. Die Gase werden durch eine Gaskühlung und Entstaubung (5) geleitet und danach einer Gaswäsche (6) zugeführt. Die Produktgase CO und H₂ werden zur Weiterverwendung über Leitung (7) abgeführt.

Enthält der Brennstoff Schwefel, wird dieser als H₂S in der Gaswäsche abgetrennt und durch Leitung (8) üblicherweise zu einer Clausanlage abgeführt, während das aus dem Synthesegas abgetrennte reine Kohlendioxid über Leitung (9) erst durch einen Verdichter (10) und dann in die Leitung (4) zurück in den Reaktor geleitet wird.

In Figur 2 wird das Prinzip des MPG-Brenners dargestellt. Der flüssige Brennstoff wird über die Düse (11) in die Vormischkammer (12) entspannt. Das Zerstäubungsmedium wird über den Ringraum (15) zugeführt und tritt mit hoher Geschwindigkeit aus der Düse (13) in die Vormischkammer ein. Der Impulsstrom des Zerstäubungsmediums bewirkt eine zusätzliche Zerteilung des Brennstoffstroms in feine Tröpfchen. Das sauerstoffhaltige Gas wird durch den Ringraum (21) herangeführt und am Brennermund, direkt beim Eintritt in den nicht dargestellten Reaktionsraum (20), mit dem Brennstoff - Zerstäubungsmedium Gemisch in Kontakt gebracht.

Die konstruktive Ausgestaltung hängt von den Eigenschaften des flüssigen Brennstoffs und des Zerstäubungsmediums und von deren Mengenverhältnissen ab. Die axiale Länge (A) der Mischkammer (12) beträgt zwischen der Austrittsöffnung des flüssigen Brennstoffs (11a) bis zur Mündung in den Reaktionsraum 10 bis 300 mm, vorzugsweise 20 - 200 mm. Der Konuswinkel (x) der Mischkammer, der gegen eine achsparallele Linie (25) gemessen wird, beträgt 2 bis 20° und üblicherweise 5 bis 15°. Der größte Innendurchmesser der Mischkammer (12) wird an der Mündungsöffnung erreicht und beträgt 10 bis 150 mm, vorzugsweise 20 bis 90 mm. Entscheidend für eine feine Zerteilung des flüssigen Brennstoffs und eine intensive Durchmischung mit dem Zerstäubungsmedium ist das Verhältnis des Durchmessers (d) des Düsenaustritts (11a) für den flüssigen Brennstoff zu dem Durchmesser (D) der Düsenöffnung (13) des Zerstäubungsmediums. Das Durchmesserverhältnis d/D beträgt 1/1.1 bis 1/5, vorzugsweise 1/1.3 bis 1/3. Dabei wird die Entspannung über die Düse (13) des Zerstäubungsmediums so eingestellt, dass die Austrittsgeschwindigkeit des Zerstäubungsmediums 20 bis 300 m/s, üblicherweise 40 bis 200 m/s beträgt.

### Beispiel 1:

Bei einer Vergasung von schwerem Rückstandsöl bei 60 bar wird CO₂ als Zerstäubungsmedium eingesetzt. Zum Vergleich wird die sonst zum Zerstäuben benötigte Wasserdampfmenge durch gleiche Masse CO₂ ersetzt. Dies verbessert die CO-Produktion deutlich und verringert den spezifischen Brennstoffverbrauch. Die Unterschiede werden in der folgenden Tabelle dargestellt:

| | Dampfzerstäubung | CO₂-Zerstäubung | Änderung [%] |
|---|---|---|---|
| CO/H₂ Verhältnis Synthesegas | 1.10 | 1.80 | +64.0 |
| Brennstoffverbrauch kg-Öl/kg-CO | 0.55 | 0.45 | -18.2 |
| Sauerstoffverbrauch kg-O₂/kg-CO | 0.57 | 0.46 | -19.3 |

Die Produktionskosten für CO sinken deutlich, da 18 % weniger Einsatzöl und 19 % weniger Sauerstoff verbraucht werden. Das wesentlich höhere CO/H₂ - Verhältnis erleichtert die Gewinnung von reinem CO in einer Cold-Box bzw. Membrananlage.

### Beispiel 2:

In einer Anlage wird reiner Wasserstoff durch die Vergasung bei 35 bar von schwerem Rückstandsöl aus einer Raffinerie erzeugt. Dazu wird das Kohlenmonoxid des Rohgases aus der MPG-Vergasung in einem CO-Shift Reaktor mit Hilfe von Wasserdampf an einem Katalysator zu Wasserstoff gewandelt. Der reine Wasserstoff wird aus dem Gas mit einer Druck-Wechsel-Adsorption (DWA-Anlage) gewonnen. Dabei entsteht ein Abgas, das H₂ (56%), CO (28%) und CO₂ (10%) enthält. Anstatt dieses Abgas dem Brenngasnetz zuzuführen und zu verbrennen, wird es komprimiert, mit Dampf gemischt und als Zerstäubungsmedium genutzt. Die Dampfmenge zum Reaktor kann um 40% reduziert werden, wenn das Abgas als Zerstäubungsmedium genutzt wird.

Durch die Rückführung des DWA-Abgases zum Reaktor ergeben sich folgende Verbesserungen in der Wasserstoffproduktion:

| Zerstäubungsmedium | Dampf | DWA-Tailgas + Dampf | Änderung [%] |
|---|---|---|---|
| Sauerstoffverbrauch m³N-O₂/ m³N-H₂ | 0.28 | 0.25 | -10.1 |
| Brennstoffverbrauch kg-Öl/m³N-H₂ | 0.36 | 0.30 | -14.4 |

Die Einsparungen bei den Betriebsmitteln Öl und Sauerstoff sind größer als der Aufwand für die Kompression des Abgases, so dass der Aufwand für die Herstellung von Wasserstoff um ca. 3% sinkt.

## Patentansprüche

1. Verfahren zur Herstellung von Synthesegasen durch partielle Oxidation von flüssigen oder festen Brennstoffen in Gegenwart von Sauerstoff oder sauerstoffhaltigen Gasen, wobei der Brennstoff, das sauerstoffhaltige Gas und das Zerstäubungsmedium getrennt dem Brenner zugeführt werden und das Zerstäubungsmedium unmittelbar vor der Mündungsöffnung für den Brennstoff über eine oder mehrere Düsen entspannt wird, **dadurch gekennzeichnet,**
**dass** der Differenzdruck der Entspannung des Zerstäubungsmediums nur 2 % bis 50 % des Reaktordruckes beträgt.

2. Verfahren nach Anspruch 1, **dadurch gekennzeichnet, dass** als Zerstäubungsmedium Kohlendioxid verwendet wird, das aus der nachfolgenden Gaswäsche abgezogen, komprimiert und dem Brenner wieder zugeführt wird.

3. Verfahren nach Anspruch 2, **dadurch gekennzeichnet, dass** das Kohlendioxid direkt oder nach leichter Überhitzung in den Brenner zugeführt wird.

4. Verfahren nach Anspruch 1, **dadurch gekennzeichnet, dass** als Zerstäubungsmedium Tailgas aus einer DWA-Anlage oder Membrananlage oder aus einer Cold Box zur Kohlenmonoxidgewinnung verwendet wird.

5. Verfahren nach Anspruch 4, **dadurch gekennzeichnet, dass** das Tailgas vor der Zuführung zum Brenner komprimiert wird.

6. Verfahren nach Anspruch 1, **dadurch gekennzeichnet, dass** das Zerstäubungsmedium mit einer Geschwindigkeit von 20 m/s bis 300 m/s aus dem Diffusor austritt.

7. Verfahren nach Anspruch 1, **dadurch gekennzeichnet, dass** das Zerstäubungsmedium mit einer Geschwindigkeit von 40 m/s bis 200 m/s aus dem Diffusor austritt.

8. Brenner zur Herstellung von Synthesegasen durch partielle Oxidation von flüssigen oder festen Brennstoffen in Gegenwart von Sauerstoff oder sauerstoffhaltigen Gasen, wobei der Brennstoff, das sauerstoffhaltige Gas und das Zerstäubungsmedium getrennt dem Brenner zugeführt werden und das Zerstäubungsmedium unmittelbar vor der Mündungsöffnung für den Brennstoff über eine oder mehrere Düsen entspannt wird, **dadurch gekennzeichnet, dass** das Verhältnis des Durchmessers (d) des Düsenaustritts (11 a) für den flüssigen Brennstoff zu dem Durchmesser (D) der Düsenöffnung (13) des Zerstäubungsmediums im Bereich von 1/1.1 bis 1/5 liegt.

9. Brenner nach Anspruch 7, **dadurch gekennzeichnet, dass** das Verhältnis des Durchmessers (d) des Düsenaustritts (11 a) für den flüssigen Brennstoff zu dem Durchmesser (D) der Düsenöffnung (13) des Zerstäubungsmediums im Bereich von 1/1.3 bis 1/3 liegt.

10. Brenner nach Anspruch 7, **dadurch gekennzeichnet, dass** die axiale Länge der Mischkammer von der Ausstrittsöffnung des Brennstoffes bis zur Mündung in den Reaktionsraum 10 bis 300 mm, vorzugsweise 20 - 200 mm beträgt.

11. Brenner nach Anspruch 7, **dadurch gekennzeichnet, dass** der Konuswinkel der Mischkammer 2 bis 20°, vorzugsweise 5 bis 15° beträgt.

12. Brenner nach Anspruch 7, **dadurch gekennzeichnet, dass** der größte Innendurchmesser der Mischkammer an der Mündungsöffnung 10 bis 150 mm, vorzugsweise 20 bis 90 mm beträgt.
